# EUROPÄISCHE PATENTSCHRIFT

(11) **EP 1 273 844 B1**
(45) Veröffentlichungstag und Bekanntmachung des Hinweises auf die Patenterteilung: **01.12.2004**
(21) Anmeldenummer: 02013781.6
(22) Anmeldetag: 21.06.2002
(51) Int. Cl.: F16L 37/34

(54) **Schnellkupplung**
Quick coupling
Raccord rapide

(30) Priorität: 04.07.2001 IT MI20011415
(43) Veröffentlichungstag der Anmeldung: 08.01.2003
(73) Patentinhaber: FASTER S.p.A., 20066 Melzo (Milano) (IT)
(72) Erfinder: Arosio, Massimo, 26027 Rivolta d Adda (IT)
(74) Vertreter: Mayer, Hans Benno, Dipl.-Ing.

(56) Entgegenhaltungen:
- EP-A- 1 179 701
- US-A- 5 937 899
- US-A- 6 116 277

## Beschreibung

Die vorstehende Erfindung betrifft eine Schnellkupplung in Flachbauweise.

Schnellkupplungen in Flachbauweise bestehen im wesentlichen aus einem rohrförmigen Bauteil, mit dem ein zylinderförmiges, abstehendes Bauteil verbindbar ist.

Diese Schnellkupplungen werden heute meistens in Flachbauweise ausgeführt, d.h. die Enden der zusammenzufügenden Kupplungsteile sind bei nicht zusammengefügten Kupplungsteilen vollständig abgeschlossen. Schnellkupplungen in Flachbauweise finden immer mehr Anwendung auf dem Gebiete der Hydraulik, dank ihrer wichtigsten Eigenschaft, die darin besteht, dass Leckverluste des Hydrauliköls beim Verbinden oder beim Auseinandernehmen der Bauteile der Kupplung vermieden werden.

Diese vorteilhafte Eigenschaft hat den Einsatz von Schnellkupplungen auch auf dem Gebiete der Landmaschinen oder Baumaschinen ermöglicht, da während des Zusammenfügens bzw. des Auseinandernehmens der Kupplungsteile tatsächlich keine Leckverluste der Hydraulikflüssigkeit festzustellen sind.

Ein Nachteil der bekannten Schnellkupplungen ist darin zu sehen, dass das Verbinden bzw. das gegenseitige Lösen nicht durchführbar ist, wenn die einzelnen Baugruppen für die Zufuhr der Hydraulikflüssigkeit sowie die anzutreibenden Einrichtungen der verschiedenen Vorrichtungen unter hohem Arbeitsdruck stehen.

Bei den bekannten Schnellkupplungen der erstgenannten Art ist am Ende des hülsenförmigen Rohrstückes üblicherweise ein ringförmiges Bauteil vorgesehen, welches das Rohrstück umgibt.

Das ringförmige Bauteil ist durch Einwirken von Hand jedesmal dann zu verschieben, wenn ein Trennen zwischen den Bauteilen der Schnellkupplung erwünscht ist, indem durch Betätigung des ringförmigen Bauteiles erreicht wird, dass die bekannten Arretierkugeln eine radial nach aussen gerichtete Bewegung durchführen und in Umfangsnuten des verschiebbaren, ringförmigen Bauteiles eintreten und im Anschluss daran die Möglichkeit eröffnet wird, das zylinderförmige Bauteil zu lösen.

Die angeführte Betätigung von Hand des ringförmigen Bauteiles stellt einen zusätzlichen Arbeitsvorgang dar, der nicht immer einfach und rasch durchführbar ist, besonders dann, wenn die Schnellkupplung in Flachbauweise, z.B. in Kombination mit einer landwirtschaftlichen Maschine oder einer Baumaschine Verwendung findet.

Ein weiterer Nachteil der vorgenannten Schnellkupplungen, die bereits auf dem Markt erhältlich sind, ist darin zu sehen, dass das hülsenförmig ausgebildete Teil der Kupplung mit dem hydraulischen Kollektor des Fahrzeuges, unter Zwischenschaltung von elastischen Rohrleitungen verbunden ist und diese Rohrleitungen zwischen dem Kollektor und jedem hülsenförmigen Bauteil der Schnellkupplung vorgesehen sind.

Das Verbinden zwischen den genannten Bauteilen unter Verwendung von elastischen Rohrleitungen führt aber zu technischen Schwierigkeiten, denn diese Rohrleitungen haben sich als äusserst störend erwiesen und müssen in genau festgelegter Lage am Fahrzeug befestigt werden; des weiteren ist nicht auszuschliessen, dass die Verbindungsleitungen beschädigt werden, was zu einem unerwünschten Austritt der Hydraulikflüssigkeit führt.

Bei direkter Zugbelastung besteht ferner die Gefahr, dass die elastischen Rohrleitungen einreissen oder vollständig zerstört werden mit der Folge, dass die Hydraulikflüssigkeit aus dem Leitungssystem austritt.

Dokument US-A-5 937 899 offenbart eine Schnellkupplung gemäß Stand der Technik

Aufgabe der vorstehenden Erfindung ist es, die Nachteile des Standes der Technik zu vermeiden und einen Schnellanschluss vorzuschlagen, der ein Lösen zwischen dem rohrförmigen Bauteil und dem zylinderförmigen Bauteil ermöglicht, ohne das Risiko einer Beschädigung einer Verbindungsleitung einzugehen und das Austreten von Hydraulikflüssigkeit hervorzurufen.

Ferner soll das Trennen der Bauteile der Schnellkupplung ohne ein manuelles Einwirken auf eine verschiebbare Muffe, die mit einem Kugelkranz für das Arretieren der zusammengefügten Bauteile der Schnellkupplung ausgerüstet ist, möglich sein und schliesslich soll ein Lösen der Bauteile der Schnellkupplung bzw. ein Zusammenfügen dieser Bauteile auch bei hohem hydraulischen Druck, in den Rohrleitungen möglich sein.

Die vorgenannten Aufgaben werden mit einem Schnellanschluss in Flachbauweise gelöst, der aus einem hülsenförmigen Bauteil sowie einem zylinderförmigen Bauteil besteht, und dadurch gekennzeichnet ist, dass das radial aussenliegende Teil des hülsenförmigen Bauteiles mit der Vorderseite eines rohrförmigen Teiles verbunden ist, und das entgegengesetzte Ende des rohrförmigen Teiles mit einer Endmuffe verbunden ist, die mit einem Kollektor oder einem Ventilkörper für die Hydraulikflüssigkeit verbunden ist und in einer vom rohrförmigen Bauteil begrenzten Kammer ein Ventilkörper vorgesehen ist, der axial verschiebbar ist und einen betätigbaren Ventilstössel aufweist, wobei der Ventilstössel mit einem rohrförmigen Bauteil verbunden ist, das sich in Längsrichtung erstreckt und in einem rohrförmigen Bauteil endet, das an seinem Endstück Öffnungen aufweist, die in Umfangsrichtung angeordnet sind, und in an sich bekannter Weise Arretierkugeln aufnehmen.

Weitere Vorteile und Merkmale der vorstehenden Erfindung können der nun folgenden Beschreibung, den Unteransprüchen und den beigefügten Zeichnungen entnommen werden.

Es zeigen:

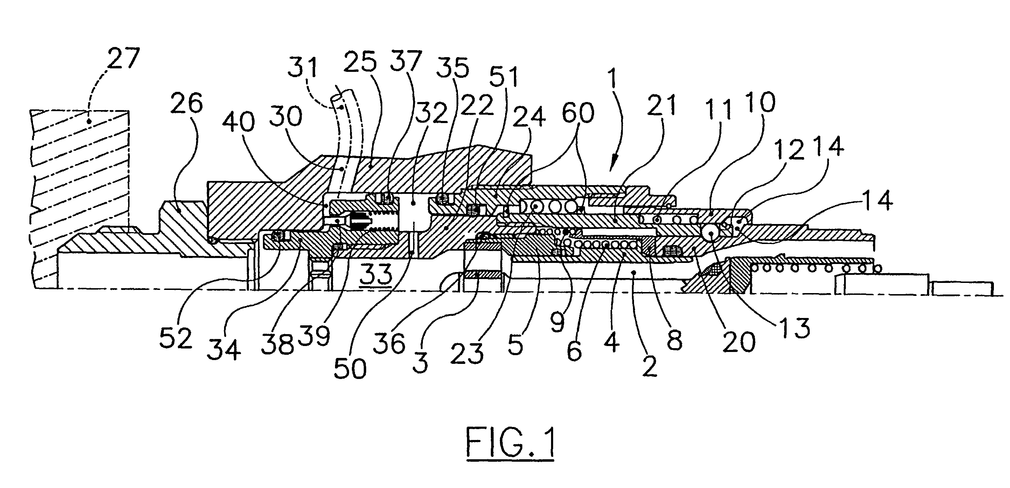

Figur 1 im Schnitt die Hälfte einer zusammengefügten Schnellkupplung;

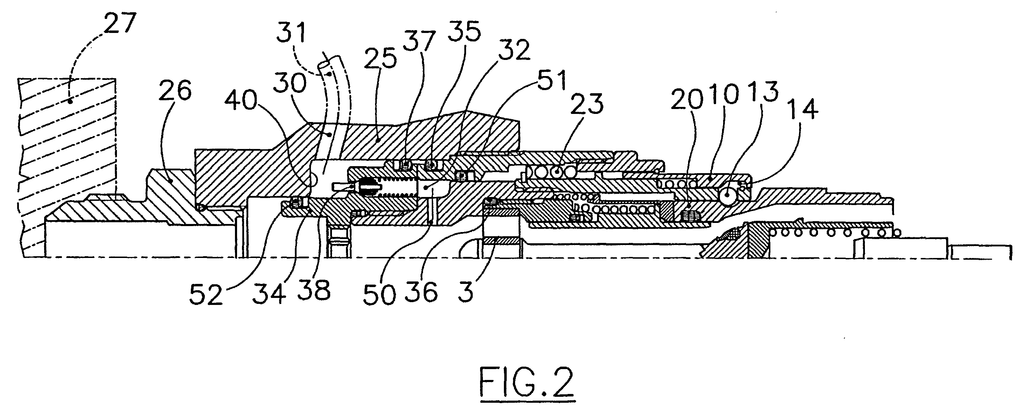

Figur 2 im Schnitt die Hälfte einer Schnellkupplung während eines Trennvorganges; und

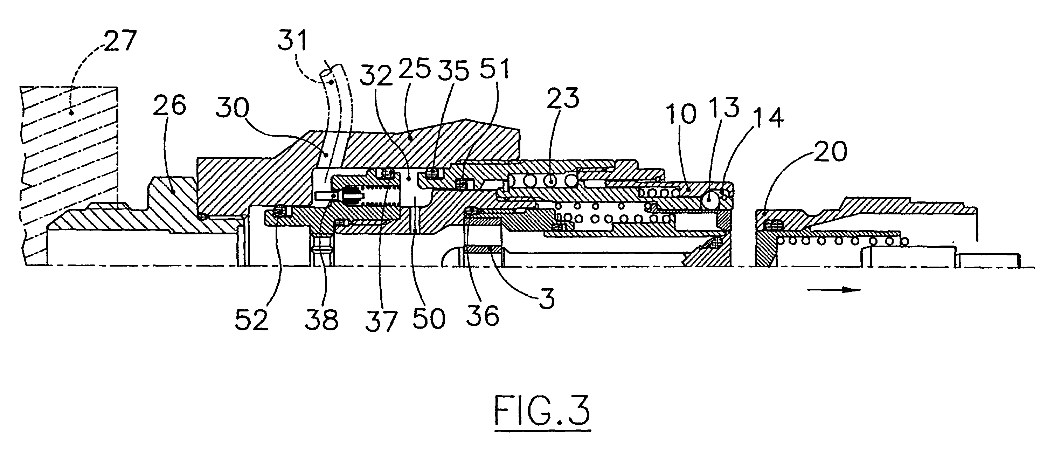

Figur 3 die Hälfte einer Schnellkupplung nach durchgeführtem Trennvorgang.

Das hülsenförmigen Bauteil, das gesamthaft mit 1 gekennzeichnet ist, weist im Inneren ein bekanntes, stabförmiges Gebilde 2 auf, das auf einem Kranz 3 gelagert ist, der im Kanal 33 für den Durchfluss der Hydraulikflüssigkeit angeordnet ist.

Im Inneren des hülsenförmigen Bauteiles 1 ist ferner ein rohrförmiges Verschiebestück 4 angeordnet, das mit einem ringförmigen Körper 5 arbeitet.

Am ringförmigen Körper 5 liegt eine Feder 6 an, die auf das Verschiebestück 4 einwirkt, das mit einem aussenliegenden, bekannten Verschiebestück 8 wirkverbunden ist, wobei das Verschiebestück 8 seinerseits durch eine Feder 9 belastet ist.

An der Vorderseite des hülsenförmigen Bauteiles 1 ist eine Muffe oder ein Verschiebestück 10 angeordnet, das von einer Feder 11 beeinflusst wird und an der Innenseite einen ringförmigen Vorsprung aufweist, der auf bekannte Kugeln 13 einwirkt, die in verschiedenen Stellungen des Verschiebestückes 10 von einer Umfangsnute 14 aufgenommen werden können, welche in das Verschiebestück 10 eingearbeitet ist.

Das zylinderförmige Bauteil weist einen rohrförmig ausgebildeteten Vorsprung 20 auf, der aus dem Stand der Technik bekannt ist und in das hülsenförmige Bauteil 4 sowie die innere Wand des rohrförmigen Bauteiles einführbar ist.

Die bisher beschriebenen Bauteile des Schnellanschlusses sind aus dem Stand der Technik bekannt.

Gemäss der vorstehenden Erfindung ist das rohrförmige Bauteil 21 mit einem rohrförmigen Bauteil 22 zusammengefügt, welches an der radial aussenliegenden Seite das rohrförmige Bauteil 24 aufnimmt, das von einer Feder 23 beeinflusst wird, die zwischen Anschlagmitteln 60, die radial vom rohrförmigen Bauteil 21 abstehen, blockiert wird.

Alle bisher beschriebenen Bauteile sind in einem rohrförmigen Körper 24 untergebracht, der in einer äusseren, rohrförmigen Hülse 25 angeordnet ist, die als Aufnahme dient.

Die rohrförmige Hülse 25 ist mit einem Endstutzen 26 verschraubt, der seinerseits in eine Gewindebohrung eingeschraubt ist, die in den Körper 27 eines Kollektors oder einer Ventilgruppe eingearbeitet ist.

Dank der Vorsehung eines Gewindestutzens 26 besteht die Möglichkeit, den Körper 25 und damit das gesamte hülsenförmige Bauteil, welches gesamthaft mit 1 gekennzeichnet ist, direkt mit dem Körper des Kollektors 27 zu verbinden, ohne hierfür Rohrleitungen vorsehen zu müssen, wobei in vorteilhafter Weise auf flexible Verbindungsleitungen, die störend sind, verzichtet werden kann.

Der rohrförmige Körper 25 weist eine Auslassbohrung 30 auf, die es erlaubt, die Hydraulikflüssigkeit über ein Röhrchen 31 aus der Kammer abzuscheiden.

Es ist vorgesehen, dass die Kammer 32 über eine Bohrung 50 mit einer Längsbohrung 33 des Anschlusses 1 in Verbindung steht.

Die Kammer 32 nimmt einen Ventilkörper 34 auf, welcher über eine Schraubverbindung mit dem rohrförmigen Körper 22, der als Lagerkörper dient, verbunden ist, und seinerseits mit dem rohrförmigen Körper 21 verbunden ist.

Zwischen dem rohrförmigen Körper 22 und dem rohrförmigen Körper 24 ist ein mit 35 gekennzeichneter Dichtungsring vorgesehen. Auch zwischen dem rohrförmigen Körper 24 und dem rohrförmigen Körper 22 ist ein Dichtungsring 36 vorgesehen.

Des weiteren ist vorgesehen, dass zwischen dem Ventilkörper 34 und dem rohrförmigen Körper 24 ein Dichtungsring 51 vorgesehen ist und auch zwischen dem rohrförmigen Körper 34 und dem rohrförmigen Körper 25 ist ein Dichtungsring 52 vorgesehen.

Des weiteren ist zwischen dem Ventilkörper 24 und dem Körper 25 ein weiterer Dichtungsring vorgesehen.

Dank der Vorsehung der Dichtungsringe 37, 51, 52 welche Abteile begrenzen, in welchem ein hydrostatischer Druck auftritt, wird eine Gleichgewichtssituation erreicht, welche ein Axialverschieben der mechanischen Bauteile, die im Inneren des rohrförmigen Bauteiles 24 angeordnet sind, ermöglicht.

Insbesondere tritt ein, dass die Summe der hydrostatischen Kräfte, welche durch die Dichtungsringe 51 und 52 festgelegt werden, gleichen Wert aufweist, aber in entgegengesetzter Richtung ausgerichtet ist als die hydrostatischen Kräfte, die durch den Dichtungsring 37 festgelegt werden.

Die Gleichgewichtssituation erlaubt ein leichtes, axiales Verschieben der gesamten, aus rohrförmigen, innenliegenden Bauteilen bestehenden Baugruppe, unabhängig vom Druck der im Hydraulikkreislauf vorherrscht.

Der Ventilkörper 34 weist ferner ein Ventil 38 auf, das über eine Feder 39 in eine absperrende Lage verschoben wird.

Der Ventilstift 38 kann gegen eine Wand 40 zur Anlage kommen, die als Anschlag dient.

Die Arbeitsweise der Schnellkupplung in Flachbauweise gemäss der vorstehenden Erfindung ist folgende:

Zu Beginn des Zusammenfügevorganges, während das hülsenförmige Bauteil unter Druck steht, wird das zylinderförmige Bauteil in das hülsenförmige Bauteil eingeschoben und der in Axialrichtung auftretende Schub des zylinderförmigen Bauteiles bewirkt ein Zurückfahren der verschiebbaren Muffe 8 bis zum Anliegen an der rohrförmigen Muffe 4, welche durch den inneren Druck, der im Inneren des hülsenförmigen Bauteiles vorherrscht, arretiert wird.

Wird der Verbindungsvorgang weiter fortgesetzt, so bewegt sich das gesamte, innenliegende Bauteil weiter rückwärts und spannt die Feder 23.

Gleichzeitig tritt das Ventil 38 in Kontakt mit der Wand 40 der Hülse 25 und folglich öffnet das Ventil 38 entgegen der Wirkung der Feder 39. Durch Öffnen des Ventiles wird somit ermöglicht, dass ein Teil der Hydraulikflüssigkeit des Kreislaufes über die Bohrung 30 austritt und über das Röhrchen 31 abfliesst, was zu einer Verminderung des inneren Druckes führt.

Die auslaufende Hydraulikflüssigkeit wird über das Röhrchen 31 zum Hauptbehälter der Hydraulikanlage der Arbeitsmaschine zurückgeführt.

Die Verminderung des Druckes im Inneren des hülsenförmigen Bauteiles der Schnellkupplung führt zu einem Entriegeln der rohrförmig ausgebildeten Muffe 4 und somit eröffnet sich die Möglichkeit, das zylinderförmige Bauteil in das Innere des hülsenförmige Bauteiles soweit einzuführen, bis die Nute, die am vorderen Endes des abstehenden Teiles des zylinderförmigen Bauteiles vorgesehen ist, den Kugeln 13 die Möglichkeit gibt, in die Nute 12 einzulaufen, wodurch ein vollständiges Einfügen des zylinderförmigen Bauteiles ermöglicht wird.

## Patentansprüche

1. Schnellkupplung in Flachbauweise bestehend aus einem hülsenförmigen Bauteil (1) sowie einem zylinderförmigen Bauteil (20), **dadurch gekennnzeichet**, dass ein rohrförmiges, radial aussenliegendes Bauteiles (24) des hülsenförmigen Bauteiles (1) mit dem vorderen Teil einer Ringmuffe (25) verbunden ist, und das entgegengesetzte Ende der rohrförmigen Muffe (25) mit einem Endstutzen (26) verbunden ist, der mit einem Kollektor (27) oder einem Ventilkörper für die Hydraulikflüssigkeit verbunden ist und in einer Kammer (32), die von dem rohrförmigen Bauteil (25) begrenzt ist, ein Ventilkörper (34) axial verschiebbar angeordnet und mit einem betätigbaren Ventilstift (38) ausgerüstet ist, wobei der Ventilkörper (34) mit einem rohrförmig ausgebildeten Körper (22) fest verbunden ist, und sich der rohrförmige Körper (22) in Längsrichtung erstreckt und in einem rohrförmigen Bauteil (21) endet, das an seinem Endstück Öffnungen aufweist, die in Umfangsrichtung angeordnet sind und geeignet sind, an sich bekannte Arretierkugeln (13) aufzunehmen.

2. Schnellkupplung, nach Patentanspruch (1) **dadurch gekennzeichnet, dass** das rohrförmige Bauteil (21) mit einem rohrförmigen Bauteil (22) verbunden ist, das an seiner radial aussenliegenden Seite eine Feder (23) aufnimmt, die zwischen Arretiermitteln (60) arretiert ist, die radial vom rohrförmigen Bauteil (21) abstehen.

3. Schnellkupplung, nach Patentanspruch (1) **dadurch gekennzeichnet, dass** die Bauteile (4, 5, 21, 22) in einem rohrförmigen Körper (24) untergebracht sind und der rohrförmige Körper (24) in eine rohrförmige, äussere Hülse (25) eingeschraubt ist, die als Lagerteil dient.

4. Schnellkupplung, nach Patentanspruch (1) **dadurch gekennzeichnet, dass** der rohrförmige Körper (25) eine Auslaufbohrung (30) aufweist, die es erlaubt, bei Betätigung des Ventils (38) über ein Röhrchen (31) die in der Kammer (32) vorhandene Hydraulikflüssigkeit über eine Durchgangsbohrung (50) zum zentralen Durchgang (25) für die Hydraulikflüssigkeit abzuleiten.

5. Schnellkupplung, nach Patentanspruch (1) **dadurch gekennzeichnet, dass** zwischen dem rohrförmigen Körper (22) des rohrförmigen Bauteiles (24) ein Dichtungsring (35) und zwischen dem rohrförmigen Körper (22) und dem rohrförmigen Bauteil (24) ein Dichtungsring (51) angeordnet ist und zwischen dem ringförmigen Bauteil (25) und dem ringförmigen Bauteil (34) ein Dichtungsring (25) und zwischen dem Ventilkörper (34) und der Hülse (25) ein Dichtungsring (37) angeordnet ist.

## Claims

1. Quick-action coupling of a flat design, comprising a sleeve-shaped component (1) and a cylinder-shaped component (20), **characterized in that** a tube-shaped, radially outer component (24) of the sleeve-shaped component (1) is connected to the front part of a ring socket (25), and the opposite end of the tube-shaped socket (25) is connected to an end connecting piece (26), which is connected to a collector (27) or a valve body for the hydraulic fluid and, in a chamber (32) which is bounded by the tube-shaped component (25), a valve body (34) is arranged in an axially displaceable manner and is equipped with an actuable valve pin (38), the valve body (34) being securely connected to a body (22) of a tube-shaped design, and the tube-shaped body (22) extending in the longitudinal direction and ending in a tube-shaped component (21) which has on its end piece openings which are arranged in the circumferential direction and are suitable for receiving arresting balls (13) known per se.

2. Quick-action coupling according to Patent Claim 1, **characterized in that** the tube-shaped component (21) is connected to a tube-shaped component (22) which on its radially outer side receives a spring (23) which is arrested between arresting means (60) protruding radially from the tube-shaped component (21).

3. Quick-action coupling according to Patent Claim 1, **characterized in that** the components (4, 5, 21, 22) are accommodated in a tube-shaped body (24) and the tube-shaped body (24) is screwed into a tube-shaped, outer sleeve (25), which serves as a bearing part.

4. Quick-action coupling according to Patent Claim 1, **characterized in that** the tube-shaped body (25) has a run-out bore (30), which, when the valve (38) is actuated, allows a small pipe (31) to be used to discharge the hydraulic fluid present in the chamber (32) via a through-bore (50) to the central passage (25) for the hydraulic fluid.

5. Quick-action coupling according to Patent Claim 1, **characterized in that** between the tube-shaped body (22) and the tube-shaped component (24) a sealing ring (35) is arranged and between the tube-shaped body (22) and the tube-shaped component (24) a sealing ring (51) is arranged, and between the ring-shaped component (25) and the ring-shaped component (34) a sealing ring (25) is arranged and between the valve body (34) and the sleeve (25) a sealing ring (37) is arranged.

## Revendications

1. Raccord rapide de construction plate se composant d'un composant en forme de douille (1) ainsi que d'un composant de forme cylindrique (20), **caractérisé en ce qu'**un composant de forme tubulaire (24), radialement extérieur, du composant en forme de douille (1) est connecté à la partie avant d'un manchon annulaire (25), et l'extrémité opposée du manchon de forme tubulaire (25) est connectée à un raccord de fermeture (26) qui est connecté à un collecteur (27) ou un corps de soupape pour le liquide hydraulique et un corps de soupape (34) est disposé dans une chambre (32), qui est limitée par le composant de forme tubulaire (25), de manière à pouvoir coulisser axialement et est muni d'une tige de soupape actionnable (38), le corps de soupape (34) étant connecté fixement à un corps (22) réalisé avec une forme tubulaire, et le corps de forme tubulaire (22) s'étendant dans la direction longitudinale et se terminant par un composant de forme tubulaire (21) qui présente à sa partie terminale des ouvertures qui sont disposées dans la direction périphérique et qui sont prévues pour recevoir des billes de blocage (13) connues en soi.

2. Raccord rapide selon la revendication 1, **caractérisé en ce que** le composant de forme tubulaire (21) est connecté à un composant de forme tubulaire (22) qui reçoit au niveau de son côté radialement extérieur un ressort (23) qui est bloqué entre des moyens de blocage (60) qui dépassent radialement depuis le composant de forme tubulaire (21).

3. Raccord rapide selon la revendication 1, **caractérisé en ce que** les composants (4, 5, 21, 22) sont montés dans un corps de forme tubulaire (24) et le corps de forme tubulaire (24) est vissé dans une douille (25) extérieure, de forme tubulaire, qui sert de pièce de palier.

4. Raccord rapide selon la revendication 1, **caractérisé en ce que** le corps de forme tubulaire (25) présente un alésage de sortie (30) qui permet, lors de l'actionnement de la soupape (38) par le biais d'un petit tube (31), de dévier le liquide hydraulique présent dans la chambre (32) à travers un alésage de passage (50) en direction du passage central (25) pour le liquide hydraulique.

5. Raccord rapide selon la revendication 1, **caractérisé en ce que** l'on dispose entre le corps de forme tubulaire (22) du composant de forme tubulaire (24) une bague d'étanchéité (35) et entre le corps de forme tubulaire (22) et le composant de forme tubulaire (24) une bague d'étanchéité (51), et entre le composant de forme annulaire (25) et le composant de forme annulaire (34) une bague d'étanchéité (25) et entre le corps de soupape (34) et la douille (25) une bague d'étanchéité (37).
